# EUROPEAN PATENT APPLICATION

(11) **EP 1 193 911 A2**
(43) Date of publication of application: **03.04.2002**
(21) Application number: 01306399.5
(22) Date of filing: 26.07.2001
(51) Int. Cl.: H04L 12/28, H04L 12/56, H04L 29/06

(54) **Method and apparatus for applying information remotely via a mobile device**

(30) Priority: 27.09.2000 SG 200005507
(71) Applicant: Hewlett-Packard Company, Palo Alto, CA 94304 (US)
(72) Inventor: Gomes, John Isaac Chandan, Singapore 449031 (SG); Tan, Ngee Chuan, Singapore 678946 (SG)
(74) Representative: Jehan, Robert

(57) **Abstract**

A method and apparatus for applying information stored remotely to an appliance (118-122) via a mobile device (100) are provided. The mobile device (100) initiates the process by sending instructions to a computer system (116) via a network (108). The instructions designate a first piece of information to be processed as well as the appliance to which the information is to be applied. According to the instructions, the computer system (116) retrieves the first piece of information and coverts the information to a document suitable for the appliance (118-122). The computer system then applied the document to the designated appliance (118-122).

## Description

This invention relates to a method and an apparatus for applying remotely-stored information via a mobile device.

Conventionally, after editing and formatting a document by using his computer application, getting an email with or without attachment, or browsing a website, a user can apply the information to an appliance. For example, the user can generate a hard copy of it by sending the information from the computer to an appliance, such as a printer connected to the computer directly or via a network, or a fax machine. The user can also send the information to a projector for displaying it. When the user is travelling, however, he has to carry the edited document in a portable media or a laptop for accessing and processing it. He may also need the laptop for retrieving emails of surfing on internet. If he wants a printed version of the document, the email, the attachment, and so on, or if he wants to project it, he has to connect the laptop to an appropriate appliance, and quite often, to install the appliance. These may not be desirable, especially for a user who travels often.

With the advent of mobile revolution, mobile devices such as mobile phones and personal digital assistants provide a solution to access information or data remotely. Some devices even allow the user to store some information in them. Nevertheless, the user of the mobile devices cannot apply the information to an appliance conveniently in that he still needs to physically connect the devices with an appliance. Furthermore, due to the compactness and the limitation of size, most mobile devices are short of storage space and processing power. Inevitably, this shortage limits the capacity of information or data that a user can store or retrieve. Besides, some mobile devices like mobile phones do not even allow applications like WinWord to be run on them.

Therefore, users of these mobile devices are restrained from accessing documents created by these applications.

In an embodiment of the invention, the invention provides a convenient method and apparatus to allow a user of a mobile device to apply remotely-stored information to an appliance.

In an embodiment according to one aspect of the invention, in a method for applying remotely-stored information to an appliance via a mobile device, the mobile device initiates the process by sending instructions to a first computer system via a first network. The instructions designate a first piece of information to be processed as well as the appliance to which the information is to be applied. The appliance is connected to the first computer system. According to the instructions, the first computer system retrieves the first piece of information and converts the information to a document suitable for the appliance. The first computer system then applies the document to the designated appliance.

In one embodiment, a plurality of appliances is registered in the first computer system. The plurality of appliances can be connected to the first computer system via a second network. The mobile device designates a first appliance from the plurality of appliances by specifying it in the instructions.

In this preferred embodiment, the mobile device designates the first piece of information by incorporating the location thereof into the instructions.

Furthermore, the first network includes a gateway with which the mobile device communicates by using standard telecommunication protocols. The gateway converts the instructions to a format which the first computer system understands. Preferably, the instructions are converted to a format suitable for transfer through the internet.

The first piece of information can be stored in a second computer. If so, the first computer system retrieves the information from the second computer for further processing.

The first appliance can be a printer, a fax machine, or a projector. In one embodiment, the first appliance is a printer and the first computer system converts the first piece of information to a print job in a format suitable for printing.

According to another embodiment of the invention, a computer system has an interface for receiving instructions from the mobile device via a first network. The instructions designate a first piece of information to be processed and the appliance to which the designated information is to be applied. The appliance is connection to the computer system. The computer system has a sub-system for processing the instructions and retrieving the designated information. The sub-system further applies the information to the appliance.

The mobile device may designate the first piece of information by incorporating the location thereof into the instructions such that the computer systems is capable of retrieving the first piece of information.

In this embodiment, the sub-system may convert the information to a format suitable for the appliance.

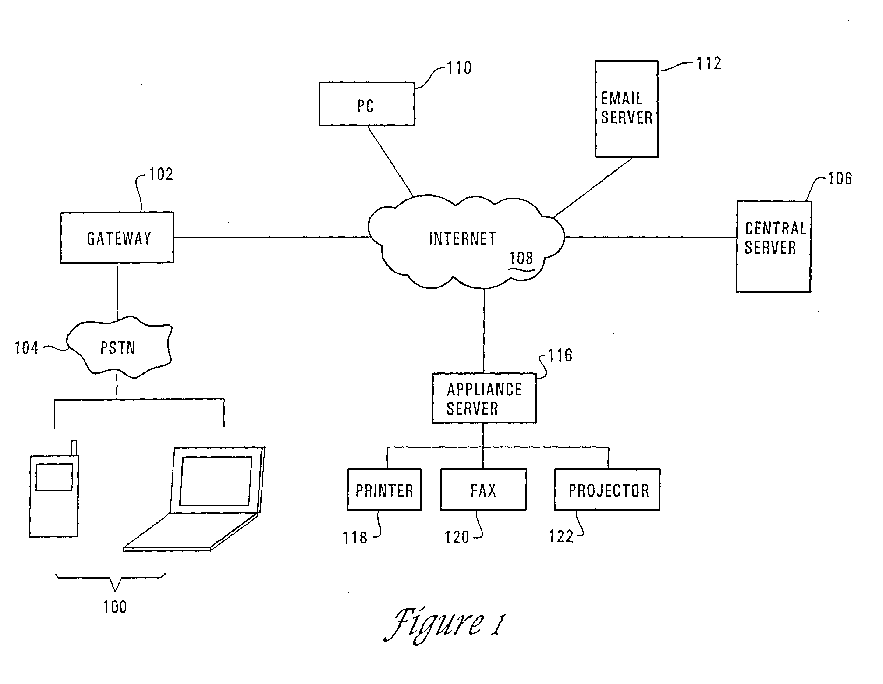

An embodiment of the present invention is described below, by way of example only, with reference to the accompanying drawings, in which Figure 1 is a schematic diagram of one embodiment of device.

In the embodiment shown in Figure 1, a user of a mobile device 100 such as a mobile phone can print documents stored in his personal computer 110 via a printer 118. To enable the user to access the documents remotely, the documents have been shared out to a central server 106 via the internet 108, that is, filenames and locations of these documents are saved in the central server 106. While the user selects the files to be shared, a string of information is packed into an HTTP packet in an illustrative format shown below:
- HTTP header
- /MapleWML/CMServer/AddFile.asp
- Username (computer name for identifying the user's personal computer)
- User Password (for the purpose of security)
- User Entered Name (e.g., a friendly name for the file)
- File Size
- HTTP Trailer.
The parameter "User Entered Name" identifies and is associated with the actual location of the individual file to be shared. By selecting such a user-entered name (to be discussed later), the central server 106 is able to identify the file to be printed.

Such an HTTP packet then will be sent to the central server 106 via the internet 108. In this embodiment, upon receiving it, the central server 106 is activated by the parameter "/MapleWML/CMServer/AddFile.asp" to run a script. Thus the information following this parameter, i.e., the Username, User password, User Entered Name, and File size, will be added to a file database (not shown) of the central server 106. The file database stores the filenames as well as the locations of the files shared out by each user.

Further, the personal computer 110 needs to be publicly accessible, that is, in a public domain so that by using its Username and User Password, other computers or servers can access and retrieve documents from it.

Additionally, a plurality of appliances, including, for example, the printer 118, a fax machine 120, and a projector 122, are connected to an appliance server 116 and are registered in the central server 106. As a result, the central server 106 knows which appliances are login and where they are through the Appliance Identities (IDs) of the individual appliances and appliance server Internet Protocol (IP) address. Similarly, the appliances get registered by the appliance server 116 which is sending the central server 106, for example, an HTTP packet in the following illustrative format:
- HTTP header
- /MapleWML/CMServer/ApplianceLogin.asp
- Appliance ID
- Password for the Appliance Server
- Appliance Server IP Address
- HTTP Trailer,
where the parameter "/MapleWML/CMServer/ApplianceLogin.asp" activates the central server 106 to run a script such that the information following this parameter in the packet will be loaded to an appliance database (not shown) of the central server 106. The parameter "Appliance ID," for example, the appliance name, identifies the appliance to be registered. The parameter "Appliance Server IP Address" helps the central server 106 to locate the appliance server 116, and further to know where the appliances are.

When the user is away from his computer 110 and wants a printed copy of his document, the user may use his mobile phone 100 to request the central server 106 for the information about those files he has shared. The request reaches the central server 106 via a Public Switched Telephone Network (PSTN) 104, a gateway 102 and the internet 108. For communication between the mobile device 100 and the gateway 102, standard telecommunication protocols such as Wireless Application Protocols (WAP) are used. It is understood that WAP is only used as a transport layer protocol, which presently sits on GSM. Higher data rate transport layers such as 3G can also be used. In the context of WAP, the mobile phone is WAP-enabled, and the request from the mobile device 100 is in the following illustrative format:
- WAP Header
- Username
- User Password
- WAP Trailer.
   The gateway 102 converts the request, as well as instructions (as discussed below), to an HTTP format suitable for transfer through the internet. Subsequently, the gateway 102 passes the request to the central server 106.

It is noted that the mobile device 100 needs to install settings for identifying the gateway 102 and the central server 106 in advance. The mobile device will then be able to contact the appropriate central server 106 via the appropriate gateway 102. Such a technology is well known in the field of wireless communication.

After receiving the request, the central server 106 packs a reply in the following illustrative HTTP format:
- HTTP Header
- <Filename>
- HTTP Trailer,
where the parameter "<Filename>" includes the user-entered-names of all the files shared out by this particular user, that is, files which are stored in the personal computer 110 and are shared out. The central server 106 further sends its reply through the established connection towards the gateway 102, which in turn would convert the reply into a WAP format for displaying on the mobile device 100.

The user selects a document to be printed and a printer to which the document is to be printed via the mobile device 100. Such a selection is incorporated into an instruction, a printing instruction in the case of this embodiment, by the mobile device 100 according to the following illustrative format:
- WAP Header
- Username
- User Password
- A First Filename (user-entered-name)
- Appliance ID
- WAP Trailer.
The parameter "A First Filename" identifies the location of the document to be printed, while the parameter "Appliance ID" identifies the appliance to which the document is to be applied. In the case of printing a document, the "Appliance ID" will be the printer name of a selected printer.

The mobile device 100 then sends the printing instruction to the central server 106 via the PSTN 104, gateway 102, and the internet 108. After receiving such an instruction, the central server 106 requests for the document to be uploaded from the user's personal computer 110 by sending the personal computer 110 the contents of the parameter "A First filename." The central server 106 identifies and accesses the personal computer 110 via the parameters of "Username" and "User Password."

The personal computer 110 accordingly packs the file identified by the parameter "A first Filename" into an HTTP packet, for example:
- HTTP Header
- /MapleWML/CMServer/FileUpload.asp
- Username
- User Password
- A First Filename
- Size of the file
- Job_ID
- File Content
- HTTP Trailer,
wherein the parameter "Job_ID" identifies the source of the job, especially, where the document to be printed comes from. The parameter "/MapleWML/CMServer/FileUpload.asp" will initiate the central server 106 to retrieve the information contained therein, including the designated document which is contained in "File Content."

The central server 106 then sends the document, as well as the Appliance ID as designated in the printing instruction, e.g., the printer name, to the appliance server 116 via the internet 108. The central server 106 locates the appliance server 116 through the appliance server IP Address. The appliances such as the printer 118, a fax machine 120, and a projector 122 are connected to the appliance server 116. The appliance server 116 has been installed with all the necessary applications and drivers of those connected appliances, in particular, printer drivers of the connected printers.

The appliance server 116 converts the document to a format suitable for the designated appliance. In the present embodiment, the document is converted to a print job in a Page Descriptive Language (PDL) format. According to the printing instruction, the print job is passed to the designated printer 118 identified by the Appliance ID, e.g., the printer name. A hard copy of the document will be then generated.

Alternatively, the user can apply the document to other appliances such as the fax machine 120 or the projector 122. The user needs to designate the appliance in the instructions being sent to the central server 106 by incorporating the appliance identity into the instructions. Accordingly, the appliance server 116 converts the retrieved document to a format suitable for the designated appliance and further pass it to the appliance.

In another embodiment according to the invention, when the user wants a printed copy of a document, the user sends the central server 106 a request in the following illustrative format:
- WAP Header
- Username
- User Password
- A First Filename
- Appliance ID
- WAP Trailer.
Thus, the central server 106 directly gets the information about the document to be retrieved, as well as the printer in which the document is to be printed, without replying to and waiting for selections from the mobile device 100. In this case, the user may need to input the desired First Filename and Appliance ID manually, unless this information is already stored in the mobile device.

Other alternatives can be made to the above-described embodiments. For example, the documents can be forwarded to and stored in the central server 106 in advance so that the central server 106 will retrieve the documents directly from its storage unit (not shown). The appliances can also be connected to the central server 106 directly, in which case the central server 106 also acts as an appliance server.

Furthermore, the user of the mobile device 100 can apply information downloaded from internet to an appliance. In such a case, the central server downloads the information directly from internet according to the instruction form the mobile device. Similarly, the user can also apply emails, with or without attachment, which are saved in an email server 112 to a suitable appliance.

Additionally, other mobile devices such as personal digital assistants can be used on condition that they are able to communicate with the gateway 102.

The disclosures in Singapore patent application no. 200005507-9, from which this application claims priority, and in the abstract accompanying this application are incorporated herein by reference.

## Claims

1. A process for applying remotely-stored information to an appliance via a mobile device, the appliance being connected to a first computer system, the process comprising:
designating a first piece of the remotely-stored information to be processed and the appliance to which the first piece of information is to be applied as instructions in the mobile device;
sending the instructions from the mobile device to the first computer system via a first network;
retrieving the first piece of information and converting the first piece of information to a format suitable for the appliance; and
applying the first piece of information to the appliance for processing according to the instructions.

2. The process of Claim 1, wherein a plurality of appliances are connected to the first computer system, the mobile device further designating the appliance among said plurality of appliances in the instructions.

3. The process of Claim 2, wherein said plurality of appliances are registered in the first computer system.

4. The process of Claim 2, wherein the mobile device designates the appliance by specifying the appliance identity in the instructions.

5. The process of any preceding claim, wherein the mobile device designates the first piece of information by incorporating the location of the first piece of information into the instructions.

6. The process of any preceding claim, wherein the first network includes a gateway with which the mobile device communicates by using standard telecommunication protocols, and the gateway converts the instructions to a format which the first computer system understands.

7. The process of any preceding claim, wherein the first piece of information is stored in a second computer from which the first computer system retrieves the information according to the instructions.

8. The process of any preceding claim, wherein the appliance is a printer, and the first computer system converts the first piece of information to a print job in a format suitable for printing.

9. The process of Claim 8, wherein the first computer system converts the first piece of information to a PDL format for printing.

10. A computer system which allows a user of a mobile device to apply remotely-stored information to an appliance designated by the mobile device, wherein the appliance is connected to the computer system, the computer system comprising:
an interface for receiving instructions from the mobile device via a first network, wherein the instructions designate a first piece of the remotely-stored information to be processed and the appliance to which the first piece of information is to be applied;
a sub-computer system connected to the interface, for processing the instructions, retrieving the first piece of information, and for passing the first piece of information to the appliance for processing.

11. The system of Claim 10, wherein the mobile device is operable to designate the first piece of information by incorporating the location of the first piece of information into the instructions such that the computer system is capable of retrieving the first piece of information

12. The system of Claim 10, wherein the sub-computer is operable to convert the information to a format suitable for the appliance.

13. The system of Claim 12, wherein the appliance is a printer, and the sub-computer system is operable to convert the first piece of information to a print job in a format suitable for printing.

14. The system of any one of Claims 10 to 13, wherein the first piece of information is stored in a second computer being connected to said system.
